# EUROPÄISCHE PATENTSCHRIFT

(11) **EP 2 181 375 B1**
(45) Veröffentlichungstag und Bekanntmachung des Hinweises auf die Patenterteilung: **08.02.2012**
(21) Anmeldenummer: 08785651.4
(22) Anmeldetag: 20.08.2008
(51) Int. Cl.: G05D 23/01, G05D 23/10, E03C 1/044

(54) **THERMOSTATISCHES SICHERHEITSVENTIL**
THERMOSTATIC SAFETY VALVE
SOUPAPE DE SÛRETÉ THERMOSTATIQUE

(30) Priorität: 21.08.2007 DE 102007039495; 28.02.2008 DE 102008011529; 08.05.2008 DE 102008022886
(43) Veröffentlichungstag der Anmeldung: 05.05.2010
(73) Patentinhaber: Otto Egelhof GmbH & Co. KG, 70736 Fellbach (DE)
(72) Erfinder: SOHN, Jürgen, 73732 Esslingen (DE)
(74) Vertreter: Maser, Jochen
(86) Internationale Anmeldenummer: PCT/EP2008/006844
(87) Internationale Veröffentlichungsnummer: WO 2009/024335

(56) Entgegenhaltungen:
- DE-A1-102006 052 296
- US-A- 2 656 983
- US-A- 3 596 872

## Beschreibung

Die Erfindung betrifft ein thermostatisches Sicherheitsventil zur Regelung eines Massenstromes, insbesondere ein Rücklauftemperaturregelventil, welches ein Gehäuse mit einer Einlass- und Auslassöffnung aufweist, die mit einer Durchlassöffnung verbunden sind, wobei in der Durchlassöffnung ein Ventilsitz angeordnet ist, der mit einem Ventilelement verschließbar ist.

Aus der US 2,656,983 ist ein thermostatisches Ventil zur Regelung eines Massenstroms bekannt. Dieses thermostatische Ventil umfasst in einer Kammer im Gehäuse zwischen der Einlassöffnung und der Auslassöffnung ein Ventilelement, an weichem ein Kraftspeicherelement angreift. Dieses Kraftspelcherelement wirkt in eine erste Bewegungsrichtung und positioniert das Ventilelement in einer Ausgangsposition. An diesem Ventilelement greift zumindest ein thermisches Stellglied an, welches eine der ersten Bewegungsrichtung entgegengesetzte Wirkrichtung aufweist. Das thermische Stellglied bewirkt temperaturabhängig eine Stellbewegung auf das Ventilelement, gegen das zumindest eine Kraftspeicherelement, sobald die Stellkraft des thermischen Stellgliedes größer als die des Kraftspeicherelementes ist. Dadurch kann in Abhängigkeit der Temperatur des durchströmenden Mediums eine Regelung des Massenstromes erfolgen.

Solche thermostatische Ventile werden im Heizungsbau eingebaut. Insbesondere bei einer Versorgung eines Hauses mit Fernwärme wird über einen zentralen Wärmetauscher das Heizungswasser durch die Fernwärme aufgeheizt. Dieses Heizungswasser wird zum einen für die Versorgung der Heizkörper in jeder Etage des Hauses verwendet, Zum anderen wird damit in einem Speicher, der auch in jeder Etage vorgesehen sein kann, Brauchwasser aufgeheizt. Der Verbrauch des aufgeheiztem Warmwassers wird erfasst und abgerechnet. Sofern jedoch der Speicher mit Brauchwasser aufgrund übermäßiger Erhitzung über die notwendige Betriebstemperatur aufgeheizt wird können Kosten entstehen, die vom versorger nicht eingefordert werden können, Dies soll verhindert werden. Durch den Einsatz von eingangs beschriebenen thermostatischen Ventilen mit einem thermischen Stellglied wird zwar ermöglicht, dass beim Überschreiten einer oberen Betriebstemperatur das thermostatische Ventil schließt, so dass keine weitere Überhitzung des Brauchwassers mehr stattfindet, jedoch kann durch dieses thermostatische Ventil eine solche Überhitzung, die auch einen Störfall darstellen kann, weder signalisiert werden, noch kann bei einer gegebenenfalls erfolgenden Beschädigung des thermostatischen Ventils eine Überwachung des Betriebszustandes des Speichers mit Brauchwasser ermöglicht sein.

Der Erfindung liegt deshalb die Aufgabe zugrunde, ein thermostatisches Ventil zur Regelung eines Massenstromes zu schaffen, welches als Sicherheitsventil ausgebildet ist und einen Störzustand, wie beispielsweise das Überschreiten einer vorbestimmten Betriebstemperatur, anzeigt.

Diese Aufgabe wird erfindungsgemäß durch das thermostatische Sicherheitsventil gemäß den Merkmalen des Anspruchs 1 gelöst. Weitere vorteilhafte Ausgestaltungen und Weiterbildungen sind in den weiteren Ansprüchen angegeben.

Durch die erfindungsgemäße Ausgestaltung des thermostatischen Sicherheitsventils mit zumindest einem Stellelement, welches in zwei definierten Endlagen selbsthaltend ist und einem Stellglied, welches bei Erreichen einer zu überwachenden Temperatur beziehungsweise einer Schalttemperatur eine Stellkraft erzeugt und das Ventilelement aus der einen Endlage in die andere Endlage überführt, ist ermöglicht, dass bei einem Überschreiten einer zu überwachenden Temperatur oder Schalttemperatur ein Ventilschließglied dieses Ventilelementes in eine Schließstellung oder Öffnungsstellung zum Ventilsitz übergeführt wird. Selbst bei einer sich anschließend ändernden Temperatur des Massenstromes und daraus resultierenden Änderungen der Stellbewegung des Stellgliedes bleibt aufgrund der Ausgestaltung des Stellelementes, welches in zwei definierten Endlagen selbsthaltend ist, die geschlossene oder offene Stellung des Ventilelementes aufrecht erhalten. So kann beispielsweise der Durchfluss des Massenstroms gesperrt oder das Sicherheitsventil bis zur Beseitigung der Störung geöffnet bleiben. Aufgrund des störungsbedingten Absperrens oder Öffnens des thermostatischen Sicherheitsventils und der Aufrechterhaltung der Abschaltung kann durch einen Wartungsdienst nachvollzogen werden, wo die Störung aufgetreten ist. Bei dem Einsatz eines solchen thermostatischen Sicherheitsventils, beispielsweise in einer Rücklaufleitung zu einem Speicher zur Aufheizung von Brauchwasser, wird dadurch ermöglicht, dass der Durchfluss des überhitzten Mediums durch den Speicher verhindert wird, so dass keine weitere Wärmezufuhr in den Speicher erfolgt. Aufgrund der Aufrechterhaltung der Abschaltposition kann die Störung einfach nachvollzogen werden. In Abhängigkeit des Einsatzfalles eines solchen thermostatischen Sicherheitsventils kann also die durch das Stellglied bewirkte Endlage des Stellelementes sowohl eine Schließposition des Ventilelementes zum Ventilsitz als auch eine Öffnungsstellung des Ventilelementes zum Ventilsitz umfassen.

Nach einer bevorzugten Ausführungsform der Erfindung ist ein vorzugsweise stab- oder stiftförmiges Element vorgesehen, welches mit dem Ventilelement in Verbindung steht und aus dem Gehäuse des Sicherheitsventils herausragt. Durch die Länge des herausragenden Endabschnittes des stab- oder stiftförmigen Elementes kann die Position des Ventilelementes erkannt werden. Unterstützend kann an dem aus dem Gehäuse herausragenden Endabschnitt des vorzugsweise stab- oder stiftförmigen Elementes als Stellungsanzeigeneinrichtung eine Markierung vorgesehen sein, die dem Wartungsdienst sofort zu erkennen gibt, in welcher Position sich das Ventilelement befindet.

Nach einer bevorzugten Ausgestaltung der Erfindung ist vorgesehen, dass das Ventilelement eine optische Stellungsanzeigeneinrichtung ansteuert, welche die Lage des Ventilelementes zur Durchlassöffnung anzeigt. Dadurch kann bereits durch eine optische Überprüfung des thermostatischen Sicherheitsventils die Störung erkannt werden. Eine solche optische Stellungsanzeigeeinrichtung kann beispielsweise dadurch gegeben sein, dass in einem Ventilgehäuse ein Sichtfenster vorgesehen und in diesem Sichtfenster eine mit dem Ventilelement in Verbindung stehende Markierung sichtbar ist.

Des Weiteren ist an dem außerhalb des Gehäuses liegenden Abschnitts des vorzugsweise stab- oder stiftförmigen Elementes bevorzugt zumindest eine Angriffsfläche vorgesehen, durch welche das Ventilelement manuell aus der einen Endlage in die andere Endlage überführbar ist. Dadurch kann eine manuelle beziehungsweise mechanische Entriegelung erfolgen, so dass beispielsweise bei der Einnahme einer Schließstellung des Ventilelementes durch das Betätigen der Stellungsanzeigeneinrichtung das Ventilelement in eine Öffnungsstellung zurückgeführt werden kann. Durch das in zwei Endlagen stabile Stellelement wird diese Öffnungsstellung selbsthaltend wieder eingenommen. Analoges gilt auch für die Einnahme der Öffnungsstellung des Ventilelementes, welches in die Schließstellung überzuführen ist.

Nach einer weiteren vorteilhaften Ausgestaltung der Erfindung ist an oder in einer Durchgangsbohrung im Gehäuse des Sicherheitsventils, insbesondere im Grundkörper oder Gehäusedeckel des Gehäuses, ein Dichtungselement vorgesehen. Dadurch kann eine mediendichte Herausführung des vorzugsweise stab- oder stiftförmigen Elementes auch bei höheren Strömungsdrücken ermöglicht werden. Dieses Dichtungselement ist beispielsweise als radiale Dichtung in der Durchgangsbohrung vorgesehen, welche eine axiale Verschiebebewegung des vorzugsweise stab- oder stiftförmigen Elementes ermöglicht. Des Weiteren kann eine Dichtungsmembrane in der Kammer des Gehäuses vorgesehen sein, die die Durchgangsbohrung überdeckt und abschließt.

Nach einer weiteren bevorzugten Ausgestaltung der Erfindung ist vorgesehen, dass das vorzugsweise stab- oder stiftförmige Element zumindest mehrteilig ausgebildet ist. Mit einer mehrteiligen Ausgestaltung kann die Durchgangsbohrung des Gehäuses beispielsweise durch eine Membran verschlossen werden, wobei die Membran zwischen zwei Abschnitten des vorzugsweise stab- oder stiftförmigen Elementes angeordnet ist. Somit kann eine innenliegende Dichtung geschaffen werden, die eine Kammer im Gehäuse schließt, in der das Ventilelement aufgenommen ist. Diese bevorzugte Anordnung ermöglicht auch, dass verschiedene aus dem Gehäuse herausführende Elemente in einfacher Weise an der Membran beziehungsweise dem Dichtelement anordenbar sind.

Nach einer weiteren bevorzugten Ausgestaltung der Erfindung ist vorgesehen, dass das Stellelement als Schnappfederelement ausgebildet ist. Solche Schnappfederelemente sind in der Konstruktion einfach und eignen sich beispielsweise für eine Temperaturüberwachung von Brauchwasser, welches in einem Temperaturbereich von beispielsweise 10° bis 60° liegt. Selbst beim Überschreiten der oberen Temperaturgrenze für Brauchwasser eignen sich solche Schnappfederelemente.

Darüber hinaus weisen solche Schnappfederelemente den Vorteil auf, dass bereits geringe Stellbewegungen genügen, um das Stellelement von der einen Endlage in die andere Endlage überzuführen. Dadurch können schnelle beziehungsweise schlagartige Stellbewegungen des Ventilelementes erzielt werden. Solche Sicherheitsfunktionen können dann von Vorteil sein, wenn das Sicherheitselement als Frostschutz eingesetzt werden sollen, und ein schlagartiges Öffnen der Durchlassöffnung bei einer Absenkung der Temperatur des zu überwachenden Mediums unterhalb des Gefrierpunktes erfolgt. Eine nur geringe Öffnung des Durchlasses würde beispielsweise bei der Überwachung eines Wassertankes zum Zufrieren des Spaltes führen. Dies wird durch das schnappfederartige Stellelement, welches in den zwei Endlagen stabil ist, vermieden.

Das als Schnappfederelement ausgebildete Stellelement ist bevorzugt ringscheibenförmig ausgebildet. Ein äußerer Randbereich greift bevorzugt an einem Gehäuse an, und ein innerer Randbereich stützt sich am Ventilelement, insbesondere am Ventilschließglied, ab. Dadurch ist eine einfach konstruktive Anordnung gegeben, um das Ventilelement in zwei stabilen Endlagen anzuordnen.

Nach einer weiteren bevorzugten Ausgestaltung des Stellelementes ist vorgesehen, dass das Schnappfederelement als Tellerfeder, als gelochte Scheibe oder als mäanderförmig ausgebildete Scheibe ausgebildet ist. In Abhängigkeit der aufzubringenden Kräfte und der Größe beziehungsweise des Durchmessers der Stellelemente können verschiedene Ausführungsformen zum Einsatz kommen.

Zur Aufnahme des Stellelementes, insbesondere Schnappfederelementes, ist bevorzugt am Gehäuse oder Ventilschließglied eine Vertiefung vorgesehen, an dem sich ein innerer beziehungsweise äußerer Randbereich abstützt und in seiner Position zum Gehäuse oder Ventilelement fixiert. Dies ermöglicht eine schnelle Montage eines solchen Stellelementes sowie ein einfaches Umklappen des Stellelementes aus der einen in die andere Endlage.

Nach einer weiteren bevorzugten Ausgestaltung der Ereindung ist zur Aufnahme des Stellelementes, insbesondere Schnappfederelementes, am Gehäuse oder Ventilelement eine Schulter vorgesehen, an der ein äußerer oder innerer Randbereich des Stellelementes anliegt und vorzugsweise mit einem Befestigungsring der äußere oder innere Randbereich zur Schulter positioniert gehalten ist. Dadurch kann eine Lagefixierung des Stellelementes erzielt werden, ohne dass aufgrund einer festen Einspannung des oder der Randbereiche die Schnappbewegung aus der einen Endlage in die andere Endlage beeinträchtigt ist.

Nach einer weiteren alternativen Ausgestaltung der Erfindung ist vorgesehen, dass das Stellelement als zumindest ein federgelagerter Rastnocken ausgebildet ist, welcher in der jeweiligen Endlage in einer Rastposition anordenbar ist. Bei dieser Ausführungsform ist beispielsweise vorgesehen, dass das Ventilelement, insbesondere das Ventilschließglied, zumindest einen federgelagerten Rastnocken aufnimmt, der an einem gegenüberliegenden Gehäuseabschnitt angreift, in dem das Ventilelement geführt ist. Dieser Gehäuseabschnitt weist zumindest eine Vertiefung auf, so dass das Ventilelement in einer Öffnungsstellung oder Schließstellung durch die federgelagerten Rastnocken gesichert positionierbar ist. Alternativ kann auch vorgesehen sein, dass der zumindest eine federgelagerte Rastnocken am Gehäuse angeordnet ist und zumindest eine Vertiefung am Ventilelement eingreift, so dass wiederum die Öffnungsstellung und Schließstellung des Ventilelementes gesichert gehalten eingenommen werden kann.

Nach einer bevorzugten Ausgestaltung der Erfindung ist vorgesehen, dass das Stellelement als zumindest eine randoffene Scheibe oder als randoffener Ring, insbesondere als Sicherungsscheibe, ausgebildet ist. Durch eine solche alternative Ausgestaltung des Stellelementes kann ebenfalls eine einfache Sicherheitsfunktion geschaffen werden, die ermöglicht, dass nach einer Schließbewegung des Ventilelementes eine Rückkehr in die Öffnungsstellung verhindert wird und die Überwindung einer vorbestimmten Stellkraft erforderlich ist, um das Ventilelement aus einer Öffnungsstellung in eine Schließstellung überzuführen.

Nach einer weiteren bevorzugten Ausgestaltung des als randoffene Scheibe oder Ring ausgebildeten Stellelementes ist vorgesehen, dass das Stellelement an einer Aufnahme am Gehäuse und an einer Aufnahme an dem stabförmigen oder stiftförmigen Element angreift und bei einer Bewegung aus der Öffnungsstellung in die Schließstellung aus zumindest einer Aufnahme am Gehäuse oder am stiftförmigen Element freikommt. Dieses Freikommen kann nach dem Überwinden einer voreinstellbaren Kraft vorgesehen sein. Hierzu wird die randoffene Scheibe der der randoffene Ring, insbesondere die Sicherungsscheibe, entsprechend ausgewählt.

Nach einer weiteren bevorzugten Ausgestaltung dieser alternativen Ausführungsform des Stellelementes ist vorgesehen, dass zumindest am Gehäuse oder stiftförmigen Element benachbart zur Aufnahme des Stellelementes eine weitere Aufnahme vorgesehen ist, in welche das Stellelement nach dem Überführen des Ventilelementes in die Schließposition aus der Öffnungsposition einrastbar ist und vorzugsweise die Schließstellung aufrecht erhält. Dadurch kann die Sicherheitsfunktion gewährleistet werden. Gleichzeitig wird bevorzugt über das stab- oder stiftförmige Element die aktuelle Position des Ventilelementes in der Schließposition angezeigt. Die Einspannung des Stellelementes als randoffene Scheibe oder Ring kann unmittelbar zwischen einer Aufnahme am Grundkörper des Gehäuses und einer Aufnahme des stab- oder stiftförmigen Elementes erfolgen. Alternativ kann ebenso vorgesehen sein, dass ein Zwischenstück vorgesehen ist, um einen Abstand zwischen dem stiftförmigen Element und einer Aufnahme am Grundkörper zu überbrücken.

Das thermostatische Sicherheitsventil weist bevorzugt als thermisches Stellglied ein Federelement auf, welches aus einer Formgedächtnislegierung ausgebildet ist. Diese Formgedächtnislegierungen weisen den Vorteil auf, dass keine Aggregatszustandsänderung erforderlich ist, wie diese beispielsweise bei flüssigkeitsgesteuerten oder mit Wachsdehnelementen gesteuerten Rücklauftemperaturbegrenzungsventilen der Fall ist. Solche Formgedächtnislegierungen sind Materialien, die nach einem Wärmeeintrag wieder zu ihrer ursprünglichen Form und Größe zurückkehren. Solche Formgedächtnislegierungen können ab einem vorbestimmten Temperaturwert eine entsprechende Stellkraft, insbesondere Schließkraft, erzeugen, so dass eine definierte Stellbewegung in Abhängigkeit der vorbestimmten Temperatur durch das thermische Stellglied aktivierbar ist.

Nach einer weiteren bevorzugten Ausgestaltung des thermostatischen Ventils ist vorgesehen, dass diesem Sicherheitsventil ein Regelventil zugeordnet ist, oder dass das Sicherheitsventil und das Regelventil bevorzugt in einem Gehäuse integriert sind, welches eine Regelung des Massenstromes innerhalb eines vorbestimmten Temperaturbereiches ermöglicht. Beispielsweise kann das Ventilelement innerhalb eines zu regelnden Temperaturbereiches über ein thermisches Stellglied ansteuerbar sein, um entsprechend der Temperatur des Massenstromes, der das thermostatische Sicherheitsventil durchströmt, den Volumenstrom zu bestimmen. Gleichzeitig wird dadurch ermöglicht, dass ein Sicherheitsventil integriert ist, so dass eine Baueinheit geschaffen ist, welche sowohl eine Volumenstromregelung des Massenstromes als auch die Einnahme einer gesicherten selbsthaltenden Schließposition oder Öffnungsposition des Ventilelements, insbesondere des Ventilschließgliedes, ermöglicht.

Nach einer weiteren bevorzugten Ausgestaltung der Erfindung ist vorgesehen, dass das am Ventilsitz angreifende thermische Stellglied erst oberhalb eines oberen Grenzwertes für einen Betriebstemperaturbereich eine Stellbewegung erzeugt und das am Ventilelement vorgesehene thermische Stellglied innerhalb eines oberen oder unteren Grenzwertes der Betriebstemperatur eine Stellbewegung erzeugt. Dadurch kann eine Einbaueinheit geschaffen werden, welche ein sogenanntes Kombinationsventil betrifft, welches sowohl ein Regel- und ein Sicherheitsventil umfasst. Sofern beispielsweise das thermische Stellglied, welches das Ventilelement ansteuert, nicht mehr zuverlässig arbeitet oder bricht, wird dieses aufgrund des weiteren Kraftspeicherelementes des Regelventils in einer geöffneten Position gehalten. Sobald dadurch die Temperatur des durchströmenden Massenstromes über einen vorgewählten Grenzwert steigt, wird der verschiebbare Ventilsitz, an dem das thermische Stellglied angreift, aus der ersten Endlage in die zweite Endlage übergeführt, in der das Ventilelement und der Ventilsitz in einer Schließposition zueinander angeordnet sind. In dieser Position kann an der Stellungsanzeigeneinrichtung eine Markierung zum Vorschein treten, die anzeigt, dass das thermische Stellglied zur Steuerung des Massenstromes zwischen einem oberen und unteren Grenzbereich der Betriebstemperatur einen Bruch umfasst. Durch die vorbeschriebene Anordnung kann auch ermöglicht werden, dass ein Bruch eines Kraftspeicherelementes angezeigt wird. Das thermische Stellglied am Ventilelement bewirkt in diesem Fall eine Stellbewegung des Ventilelementes in Schließrichtung zum Ventilsitz oder schließt den Ventilsitz und zeigt über eine weitere Markierung der Stellungsanzeigeneinrichtung diesen Fehler an.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittdarstellung einer ersten Ausführungsform eines erfindungsgemäßen thermostatischen Sicherheitsventils,
- Figur 2: eine schematische Schnittdarstellung einer alternativen Ausführungsform zu Figur 1,
- Figur 3: eine schematisch vergrößerte Teilansicht eines Ventilschließgliedes des Sicherheitsventils gemäß Figur 2,
- Figur 4: eine schematische Schnittdarstellung einer weiteren alternativen Ausführungsform zu Figur 1,
- Figur 5: eine schematische Schnittdarstellung einer weiteren alternativen Ausführungsform zu Figur 1,
- Figur 6: eine schematische Schnittdarstellung einer weiteren alternativen Ausführungsform zu Figur 1,
- Figur 7: eine schematische Schnittdarstellung einer Kombination eines thermostatischen Regelventils und einem erfindungsgemäßen thermostatischen Sicherheitsventil,
- Figur 8: eine schematische Schnittdarstellung einer alternativen Ausführungsform zu Figur 6,
- Figur 9: eine schematische Schnittdarstellung einer weiteren alternativen Ausführungsform zu Figur 6,
- Figur 10: eine schematische Schnittdarstellung einer weiteren alternativen Ausführungsform zu Figur 8,
- Figur 11: eine schematische Darstellung einer Einbausituation für das erfindungsgemäße thermostatische Sicherheitsventil und
- Fig. 12 bis 14: schematische Darstellungen zu alternativen Ausgestaltungen eines Reglers gemäß Figur 7.

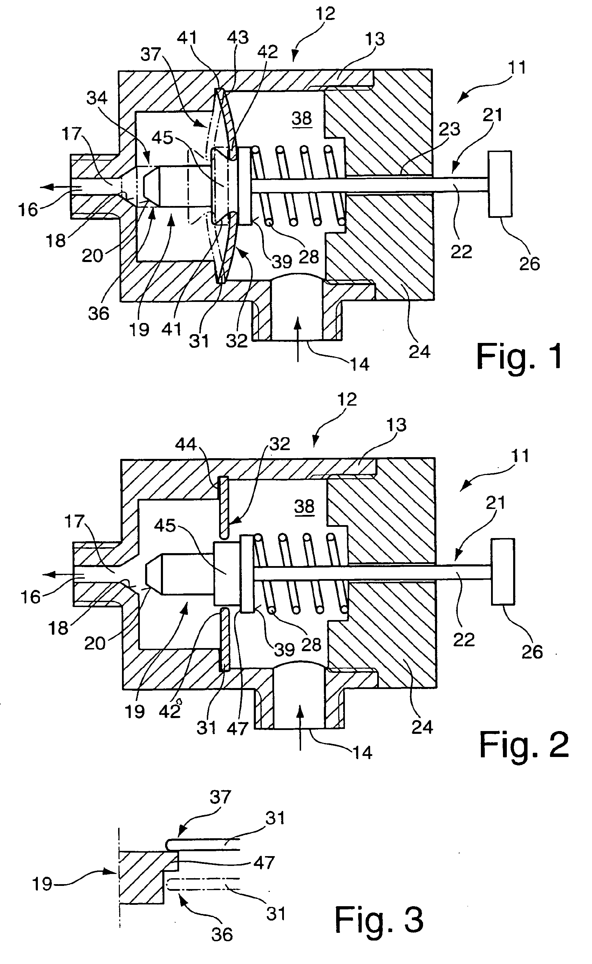

In Figur 1 ist eine schematische Schnittdarstellung eines thermostatischen Sicherheitsventils 11 dargestellt. Dieses Sicherheitsventil 11 umfasst ein Gehäuse 12 mit einem Grundgehäuse 13, in dem eine Einlassöffnung 14 und eine Auslassöffnung 16 vorgesehen sind. Eine Durchlassöffnung 17 verbindet die Einlassöffnung 14 mit der Auslassöffnung 16 und umfasst einen Ventilsitz 18, welcher mit einem Ventilschließglied eines Ventilelementes 19 verschließbar ist.

An dem Ventilelement 19 ist ein stabförmiges Element 22 vorgesehen, welches beispielsweise eine Stellungsanzeigeneinrichtung 21 umfasst, das ausgehend von dem Ventilelement 19 sich durch eine Durchgangsbohrung 23 eines Gehäuse-deckels 24 nach außen erstreckt. Alternativ kann die Durchgangsbohrung 33 auch im Grundgehäuse 13 vorgesehen sein. An einem äußeren aus dem Gehäuse 12 hervorstehenden Abschnitt des stabförmigen Elementes 22 ist eine Angriffsfläche 26 vorgesehen, um von außen eine manuelle Betätigung des Ventilelementes 19 zu ermöglichen.

Zwischen dem Ventilelement 19 und dem Gehäusedeckel 24 ist ein thermisches Stellglied 28 vorgesehen. Dieses thermische Stellglied 28 ist beispielsweise als Federelement ausgebildet und besteht aus einer Formgedächtnislegierung. Solche Formgedächtnislegierungen, die auch als SMA-Legierungen (Shape Memory Alloy) bezeichnet werden, bestehen beispielsweise aus einer TiNi-Legierung oder einer Legierung aus Cu-Basis, Fe-Basis oder aus einem Memorykunststoff. Solche Formgedächtnislegierungen ermöglichen ab einem bestimmten Temperaturwert eine Stellbewegung. Da diese Formgedächtnislegierungen ihren Aggregatzustand im Gegensatz zu Wachsdehnelementen oder Flüssigkeitselementen nicht ändern, sind schnelle Reaktionszeiten gegeben. Darüber hinaus können hohe Schließkräfte bewirkt werden.

Das Ventilelement 19 und das Gehäuse 12, insbesondere das Grundgehäuse 13, sind durch ein Stellelement 31 miteinander wirkverbunden. Dieses Stellelement 31 ist beispielsweise als Schnappfeder ausgebildet, welche zwei definierte Endlagen 32, 37 aufweist, in welchen dieses Stellelement 31 stabil ist. Das Stellelement 31 kann sich selbsthaltend in den jeweiligen Endlagen 32, 37 anordnen. Bevorzugt können Tellerfedern eingesetzt werden, welche die zwei stabilen beziehungsweise definierten Endlagen 32, 37 einnehmen können. Das Stellelement 31 kann alternativ auch als gelochte Federscheibe oder mäanderförmige Scheibe ausgebildet sein, welche ein Umklappen ermöglicht, so dass diese die selbsthaltende erste und zweite Endlage 32, 37 einnimmt. Bei der in Figur 1 dargestellten Anordnung ist das Stellelement 31 in einer ersten Endlage 32 vorgesehen, in welcher das Ventilelement 19 in einer Öffnungsstellung 34 zum Ventilsitz 18 angeordnet ist. Strichliniert ist das Ventilelement 19 in einer Schließstellung 36 dargestellt, wobei das Stellelement 31 in einer zweiten Endlage 37 vorgesehen ist.

An dem Ventilelement 19 ist beispielsweise eine umlaufende Vertiefung 41 vorgesehen, an der ein innerer Randbereich 42 des Stellelementes 31 angreift. Zur einfachen Aufnahme des inneren Randbereiches 42 des Stellelementes 31 am Ventilelement 19 ist dieses beispielsweise als halbkreisförmige Vertiefung 41 ausgestaltet. Analoges kann auch für das Grundgehäuse 13 zur Aufnahme des äußeren Randbereichtes 43 gelten. Gemäß der Ausführungsform stützt sich ein äußerer Randbereich 43 des Stellelementes 31 an einer Schulter 44 ab, welche in der Kammer 38 des Grundgehäuses 13 ausgebildet ist.

Das Ventilelement 19 ist gemäß der dargestellten Ausführungsform beispielsweise einteilig ausgebildet und umfasst einen Grundkörper 45, an dem die Vertiefung 41 sowie das Ventilschließglied 20 vorgesehen sind. Ergänzend kann das stabförmige oder stiftförmige Element 22 vorgesehen sein, welches zumindest bis in den Gehäusedeckel 24 oder in einen weiteren Gehäuseabschnitt ragt, so dass das Ventilelement 19 in der Kammer 38 geführt ist. Alternativ kann das Ventilelement 19 auch mehrteilig und für eine einfache Montage aus mehreren Teilen steckbar ausgebildet sein.

Durch die Anordnung eines Gehäusedeckels 24 in einem Grundgehäuse 13 zur Bildung eines Gehäuses 12 über vorzugsweise eine Schraubverbindung kann des Weiteren eine Vorspannkraft des thermischen Stellgliedes 28 eingestellt werden. Durch diese Vorspannkraft kann auch der Schaltzeitpunkt beziehungsweise der Zeitpunkt des Umklappens des Stellelementes 31 aus der ersten Endlage 32 in die zweite Endlage 37 eingestellt werden.

Das vorbeschriebene Sicherheitsventil 11 kann beispielsweise wie folgt arbeiten: Ein Massenstrom durchströmt das Sicherheitsventil 11 und gelangt über die Einlassöffnung 14 zur Auslassöffnung 16. Sobald die Temperatur des Massenstromes eine vorbestimmte Temperatur innerhalb eines oberen und unteren Grenzwertes für die Betriebstemperatur übersteigt, erzeugt das thermische Stellglied 28 eine Schließkraft, die höher ist als die Haltekraft des Stellelementes 31 in der ersten Endlage 32. Dadurch wird das Ventilelement 19 aus seiner Öffnungsstellung 34 in die Schließstellung 36 übergeführt, und das Stellelement 31 nimmt die zweite Endlage 37 ein. Aufgrund der Schließposition 36 ist ein Durchströmen des Massenstromes nicht mehr möglich, und das sich in einer Kammer 38 befindende Medium kühlt ab. Die Steil- oder Schließkraft des thermischen Stellgliedes 28 nimmt mit kühler werdendem Massenstrom ab. Aufgrund der Ausgestaltung des Stellelementes 31 als selbsthaltendes Element in den beiden Endlagen 32, 37 kann eine gesicherte selbsthaltende Schließposition 36 aufrechterhalten werden. Das Stellglied 28 liegt nur an einer Abstützfläche 39 am Ventilelement 19 an, so dass bei einer Reduzierung der Schließkraft des Stellgliedes 28 keine zwangsweise Rückführung des Ventilelementes 19 in die Öffnungsposition 32 erfolgt.

Diese Schließstellung 36 des Ventilelementes 19 wird über die Position des aus dem Gehäuse 12 herausragenden stabförmigen Elementes 22 durch die Stellungsanzeigeneinrichtung 21 angezeigt. Bevorzugt kann an dem stabförmigen Element 22 eine Skalierung oder eine oder mehrere Markierungen vorgesehen sein, die die entsprechende Position des Ventilelementes 19 erkennbar machen. Über die Angriffsfläche 26 kann nach der Feststellung einer Störung eine mechanische Entriegelung ermöglicht werden, so dass das thermostatische Sicherheitsventil 11 erneut in Betriebszustand versetzt wird und einsatzbereit ist.

Die in Figur 1 dargestellte Anordnung des thermostatischen Sicherheitsventils 11 ermöglicht folglich, dass bei einer Temperaturerhöhung oberhalb eines bestimmten Grenzwertes das Ventilelement 19 in eine Schließstellung 36 übergeführt wird. Dieses thermostatische Sicherheitsventil 11 kann ebenso auch dahingehend ausgebildet sein, dass beim Überschreiten einer vorbestimmten Betriebstemperatur eine Stellbewegung des Stellelementes 31 zum Öffnen der Durchlassöffnung 17 führt, so dass das Ventilelement 19 aus seiner Schließstellung in eine Öffnungsstellung überführbar ist. Solche thermostatischen Sicherheitsventile 11 ermöglichen beide Anwendungsfälle und sind nicht auf die in Figur 1 dargestellte Anwendung beschränkt.

In Figur 2 ist eine alternative Ausführungsform zu Figur 1 dargestellt. Diese Ausführungsform unterscheidet sich in der Aufnahme des inneren Randbereiches 42 des Stellelementes 31 zum Ventilelement 19. Bei dieser Ausführungsform ist beispielsweise an dem Ventilelement 19 eine Schulter 47 vorgesehen, an welcher ein innerer Randbereich 42 des Stellelementes 31 in einer ersten Endlage 32 anliegt. Sofern das Ventilelement 19 in eine Schließstellung 36 übergeführt ist, hintergreift der innere Randbereich 42 des Stellelementes 31 die Schulter 47 und fixiert das Ventilelement 19 in der zweiten Endlage 37, also in der Schließstellung 36 im Ventilsitz 18, wie beispielsweise in Figur 3 dargestellt ist. Alternativ kann vorgesehen sein, dass die Schulter 47 eine umlaufende Vertiefung 41 aufweist, in welche das Stellelement 31 beim Überführen des Ventilelementes 19 aus der ersten Endlage 32 in die zweite Endlage 37 eingreift und die Schließstellung 36 hält.

Die vorstehenden Ausführungen zu Figur 1 und Figur 2 gelten analog für eine nicht näher dargestellte Ausführungsform, bei der beispielsweise das Ventilelement 19 feststehend am Grundgehäuse 13 angeordnet ist und ein Ventilsitz 18 durch das thermische Stellglied 28 aus einer ersten Endlage 32 in eine zweite Endlage 37 übergeführt werden kann.

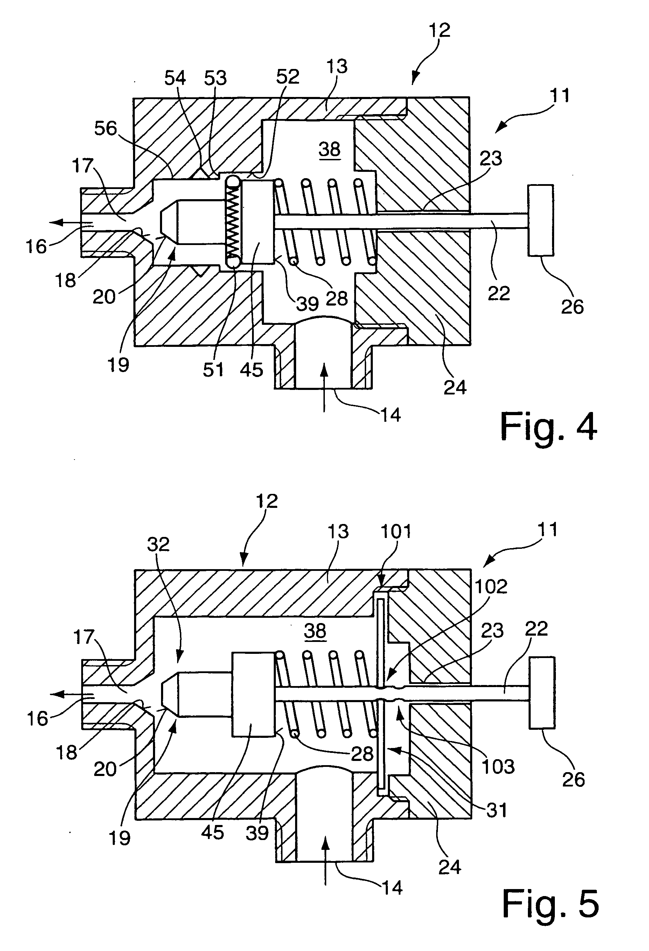

In Figur 4 ist eine alternative Ausführungsform eines Stellelementes 31 zu den Ausführungsformen in Figur 1 und 2 dargestellt. Dieses Stellelement 31 besteht aus zumindest einer gefederten Rastnocke 51 oder gefedertem Kugelelement, welches beispielsweise im Ventilelement 19 angeordnet ist. Bevorzugt umfasst der Grundkörper 45 des Ventilelementes 19 eine Durchgangsbohrung, deren Randbereiche geringfügig verjüngt sind, so dass die darin eingesetzten Rastnocken 51 beziehungsweise gefederten Kugeln in der Durchgangsbohrung gehalten werden. Dazwischen liegend ist beispielsweise ein Federelement eingebracht. Alternativ kann auch vorgesehen sein, dass Einsätze in den Grundkörper 45 eingebracht werden. Solche Einsätze umfassen eine federgelagerte Kugel, so dass über die Einstellung der Position des Einsatzes im Ventilelement 19 auch die Rastkraft eingestellt werden kann. Die Anzahl der Rastnocken 51 kann in Abhängigkeit der Kräfte entstehen, um die stabile Endlage 32, 37 des Stellelementes 31 einzunehmen. Alternativ zu den Rastnocken 51 können auch federgelagerte Laschen oder sogenannte Federarme einer Hülse vorgesehen werden, die ermöglichen, dass eine stabile Endlage 32, 37 eingenommen werden kann.

In der in Figur 4 dargestellten ersten Endlage 32 liegt die gefederte Rastnocke 51 an einer Umfangsfläche 52 der Kammer 38 an, die durch eine Schulter 53 begrenzt ist. Aufgrund der sich daran angrenzenden Schulter 53 wird durch die geringe Stellkraft des thermischen Stellglieds 28 das Ventilelement 19 vorzugsweise definiert in einer ersten Öffnungsstellung 34 gehalten. Sofern das thermische Stellglied 28 aufgrund einer Erhöhung der Temperatur des Massenstromes über einen vorbestimmten Sollwert Schließkräfte aufbaut, wird die zumindest eine Rastnocke 51 zumindest teilweise in das Ventilelement 19 hineingedrückt. Dadurch erfolgt eine Stellbewegung des Ventilelementes 19 in die Schließstellung 36. Nach dieser Stellbewegung des Ventilelementes 19 durch das thermische Stellglied 28 rastet die zumindest eine Rastnocke 51 in eine Vertiefung 54 ein, welche wiederum in einer Kammerwand 56 des Gehäuses 12 vorgesehen ist. Das Stellelement 31 nimmt eine definierte zweite oder stabile Endlage 37 ein und positioniert das Ventilelement 19 in der Schließstellung 36.

Es versteht sich, dass die in Figur 4 dargestellte Anordnung der Rastnocke 51 und Vertiefung 54 auch vertauscht vorgesehen sein kann, so dass am Ventilelement 19 eine Schulter 53 oder eine Vertiefung 56 ausgebildet und die zumindest eine gefederte Rastnocke 51 im Gehäuse 12 aufgenommen ist.

In Figur 5 ist eine schematische Schnittdarstellung einer weiteren alternativen Ausführungsform zu den vorstehenden Figuren 1 bis 4 dargestellt. Bei dieser Ausführungsform ist das Stellelement 31 als randoffene Scheibe oder als randoffener Ring ausgebildet, welcher in einer Aufnahme 101 am Gehäuse 12 einerseits und in einer Aufnahme 102 am stab- oder stiftförmigen Element 22 andererseits eingreift. Die Aufnahme 101 kann beispielsweise durch einen Absatz gebildet werden, der sich beim Verbinden des Gehäusedeckels 24 mit dem Grundkörper 13 ergibt, so dass ein äußerer Randbereich dieses Stellelementes 31 dort eingespannt oder in der Aufnahmelage gesichert ohne Verspannung aufgenommen ist. Die Aufnahme 101 am stiftförmigen Element 22 ist bevorzugt als umlaufende Vertiefung vorgesehen. Des Weiteren kann vorgesehen sein, dass die randoffene Scheibe oder der randoffene Ring über ein Adapterstück aufgenommen ist, welches entweder am stab- oder stiftförmigen Element 22 angeordnet oder angeformt ist oder am Grundkörper 13 oder Gehäusedeckel 24 angreift oder angeformt ist. Benachbart zur Aufnahme 102 am stabförmigen Element 22 ist beispielsweise eine weitere Aufnahme 103 vorgesehen. Sobald das Ventilelement 19 aus der Öffnungsstellung 34 in die Schließstellung 36 übergeführt wurde, kann das Stellelement 31 in die Aufnahme 103 einrasten, wobei gegenüberliegend das Stellelement 31 in der Aufnahme 101 verbleibt. Dadurch wird die Schließstellung 36 gesichert. Alternativ kann vorgesehen sein, dass diese Aufnahme 103 am Grundgehäuse 13 oder Gehäusedeckel 24 vorgesehen ist. Im Übrigen gelten die Ausführungen zu den vorstehenden Figuren 1 bis 4.

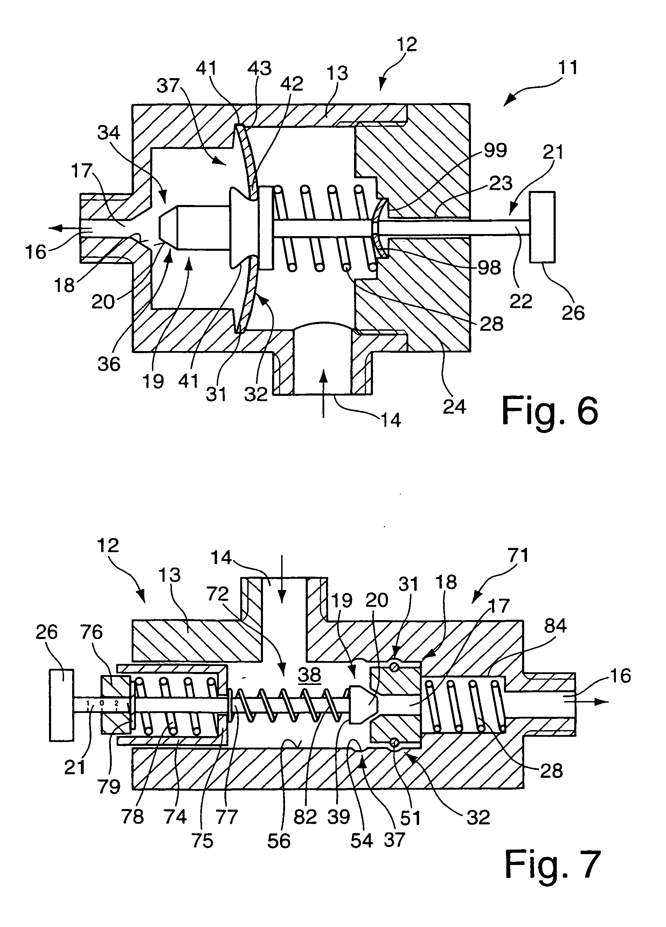

In Figur 6 ist eine schematische Schnittdarstellung einer alternativen Ausführungsform zu Figur 1 dargestellt. Nachfolgend werden die Abwandlungen beschrieben. In Bezug auf die nicht abgewandelten Elemente wird vollumfänglich auf Figur 1 Bezug genommen.

Das vorzugsweise stab- oder stiftförmige Element 22 ist bei dieser Ausführungsform zweiteilig ausgebildet. Ein erster Teil des Elementes 22 greift einerseits am Ventilelement 19 und andererseits mit seinem gegenüberliegenden Ende an einem Dichtungselement 98, insbesondere einer Membran, an. Dieses Dichtungselement 98 ist bevorzugt in einer umlaufenden Schulter 99 positioniert. Durch ein solches membranförmiges Dichtungselement 98 kann die Durchgangsbohrung 23 mediendicht geschlossen werden. An der gegenüberliegenden Seite des Dichtungselementes 98 ist ein zweiter Abschnitt des stift- oder stabförmigen Elementes 22 vorgesehen, der die Durchgangsbohrung 23 durchdringt und ebenfalls an dem Dichtungselement 98 angreift. Dadurch kann über die Stellungsanzeigeneinrichtung 21 wiederum die Position des Ventilelementes 19 in dem Sicherheitsventil 11 erkannt werden. Gleichzeitig ist dadurch ermöglicht, dass der Anschlag 26 zum Überführen des Ventilelementes 19 aus einer Schließstellung 36 in eine Öffnungsstellung 34 betätigbar ist, ohne dass die Wirkung am Dichtelement 98 beeinflusst wird. Alternativ kann in der Durchgangsbohrung 23 oder am äußeren Endbereich der Durchgangsbohrung 23 eine Dichtung vorgesehen sein, welche mediendicht zum vorzugsweise stift- oder stabförmigen Element 22 abdichtet und eine axiale Schiebebewegung ermöglicht. Es versteht sich, dass die vorstehenden Sicherheitsventile 11 auch als Überhitzungsventile nach dem analogen Arbeitsprinzip ausgebildet sein können. Dabei ist vorgesehen, dass das Ventil zunächst geschlossen ist und bei einer Überhitzung öffnet.

In Figur 7 ist eine schematische Schnittdarstellung eines thermostatischen Ventils 71 vorgesehen, in dem ein Regelventil 72 und das thermostatische Sicherheitsventil 11 bevorzugt in einem Gehäuse 12 integriert sind. Das Gehäuse 12 umfasst bevorzugt ein Grundgehäuse 13. Alternativ können auch ein Grundgehäuse 13 und weitere Gehäuseabschnitte zusammen das Gehäuse 12 bilden. Das Regelventil 72 umfasst einen Gehäuseabschnitt 74, der in das Grundgehäuse 13 bevorzugt einschraubbar ist. Dieser Gehäuseabschnitt 74 ist durch einen Deckel 76 mit einer Verschraubung oder anderweitig lösbaren Fixierung verschlossen. Ein Übertragungsstift 77 wird durch den Gehäuseabschnitt 74 und den Deckel 76 hindurch geführt und ragt an einer Seite heraus. Zwischen dem Gehäuseabschnitt 74 und dem Deckel 76 ist ein Kraftspeicherelement 78 vorgesehen, welches sich an einem Ende an dem Gehäuseabschnitt 74 und am anderen Ende über eine Stützscheibe 79, welche fest an dem Übertragungsstift 77 angeordnet ist, abstützt. Das äußere gegenüber dem Deckel 76 herausragende Ende des Übertragungsstiftes 77 ist Teil der optischen Stellungsanzeigeneinrichtung 21. Aus der Position des Übertragungsstiftes 77 kann die Position des Ventilelementes 19 in der Kammer 38 entnommen werden.

Zwischen dem Ventilelement 19 und einem Boden 75 des Gehäuseabschnittes 74 ist ein thermisches Stellglied 82 vorgesehen, welches beispielsweise aus einer Formgedächtnislegierung als Federelement ausgebildet ist. Dieses Regelventil 72 ist bevorzugt als komplette Einheit in das Grundgehäuse 13 einsetzbar.

In dem Gehäuse 12 ist des Weiteren das thermostatische Sicherheitsventil 11 integriert, wobei der Ventilsitz 18 als verschiebbarer Ventilsitz ausgebildet und durch das Stellelement 31 aus einer ersten Endlage 32, wie dargestellt, in eine zweite Endlage 37 übergeführt werden kann. Zum Überführen des Ventilsitzes 18 aus der ersten Endlage 32 in die zweite Endlage 37 ist das thermische Stellglied 28 in einem Bohrungsabschnitt 84 vorgesehen und greift an dem Ventilsitz 18 an. Bei dieser Ausführungsform des Sicherheitsventils 11 ist das Stellelement 31 beispielsweise als Rastnocken 51 ausgebildet, der in eine Vertiefung 54 in der Kammerwand 56 angreift und somit selbsthaltend in der ersten Endlage 32 oder zweiten Endlage 37 anordenbar ist.

In einer nicht näher dargestellten alternativen Ausführungsform zu Figur 7 ist anstelle der am verschiebbaren Ventilsitz 18 angeordneten Rastnocke, die in einer gegenüberliegenden Vertiefung am Grundgehäuse 13 eingreift, eine Presspassung zwischen dem Ventilsitz 18 und dem Ventilsitz 18 umgebenden Gehäuseabschnitt beziehungsweise Bohrungsabschnitt vorgesehen. Diese Presspassung zwischen dem Ventilsitz 18und einem gegenüberliegenden Bohrungsabschnitt am Grundgehäuse 13 ist derart ausgelegt, dass beim Aufbringen einer Stellkraft durch das thermische Stellglied 28 ein Lösen des Presssitzes erfolgt, sobald eine vorbestimmte Stellkraft des Stellgliedes 28 überschritten wird. Diese vorbestimmte Stellkraft des thermischen Stellgliedes 28 kann durch Auslegung insbesondere der Formgedächtnislegierung gegeben sein, so dass ab einer bestimmten Temperatur die vorbestimmte Stellkraft erreicht wird, um somit zu erzielen, dass der verschiebbare Ventilsitz 18 am Ventilelement 19 anliegt und die Durchlassöffnung 17 schließt.

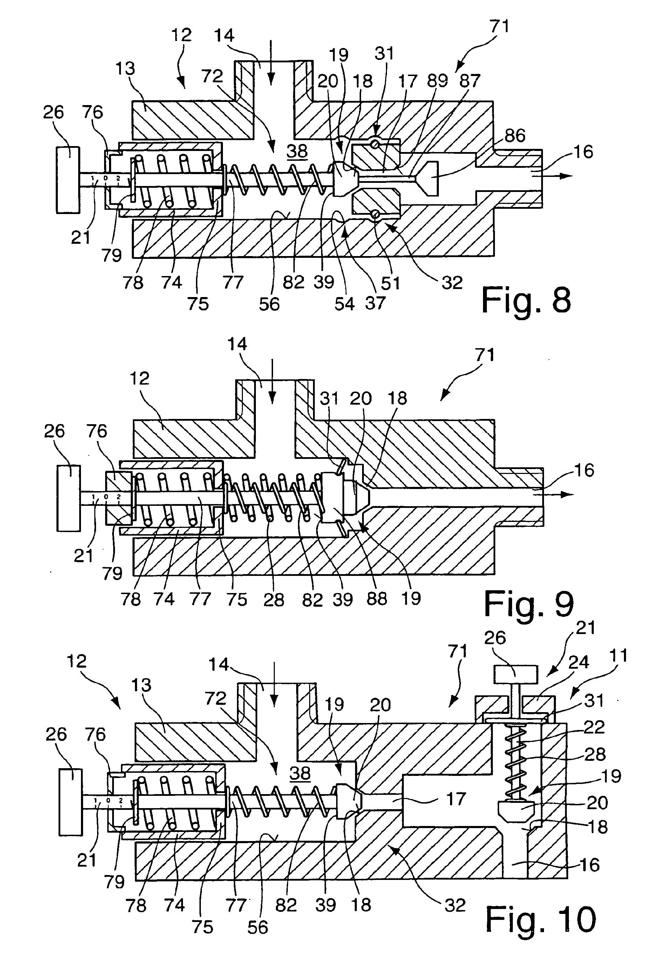

In Figur 8 ist eine weitere alternative Ausführungsform zu Figur 7 dargestellt. Bei dieser Ausführungsform ist dem Ventilelement 19 ein weiteres Ventilelement 86 zugeordnet. Dieses zweite Ventilelement 86 ist durch ein Stiftelement 87 in einem vorbestimmten Abstand zum Ventilelement 19 angeordnet. Insbesondere kann das Stiftelement 87 durch eine Schraubverbindung mit dem Ventilelement 19 oder dem Übertragungsstift 77 lösbar verbunden sein. Dem Ventilsitz 18 ist gegenüberliegend ein Ventilsitz 89 zugeordnet, so dass dieses Ventil beidseitig wirksam ausgebildet ist. Folglich kann das Ventilschließglied 20 des Ventilelementes 19 sowie auch das Ventilschließglied 20 des Ventilelementes 86 die Durchlassöffnung 17 schließen. Die Anordnung des Ventilsitzes 18 kann sowohl gemäß der in Figur 8 dargestellten Ausführungsform ausgebildet sein als auch durch eine Presspassung, wie dies in einer alternativen vorstehenden Ausführungsform beschrieben ist. Des Weiteren kann alternativ vorgesehen ein, dass der verschiebbare Ventilsitz 18 ein Abschnitt des Grundgehäuses 13 ist. Zur Montage ist bevorzugt vorgesehen, dass die Auslassöffnung 16 im Durchmesser größer als das zweite Ventilelement 86 ausgebildet ist.

Die Funktionsweise dieser alternativen Ausführungsform ist analog zur Ausführungsform gemäß Figur 7. Dieses zweite Ventilelement 86 bildet jedoch eine Sicherheitsfunktion, sofern das thermische Stellglied 82 brechen sollte. In einem solchen Fall führt das Kraftspeicherelement 78 den Stift 77 nach links. Dadurch kommt bevorzugt zunächst das zweite Ventilelement 86 zur Anlage am Ventilsitz 18 und schließt die Durchlassöffnung 17. Alternativ kann diese Schließbewegung auch durch das Anliegen der Stützscheibe 79 am Deckel 76 begrenzt sein. Der Deckel 76 ist bevorzugt modifiziert, insbesondere zur Freigabe eines zusätzlichen Hubweges für den Übertragungsstift 77, gegenüber dem Deckel 76 in Figur 7, 9 und 10 ausgebildet, um die Schließfunktion des zweiten Ventilelementes 86 zu ermöglichen. Somit ist die Sicherheitsfunktion gegeben, dass das thermostatische Ventil 71 im Schadensfall des thermischen Stellgliedes 82 geschlossen wird. Gleichzeitig kann dieser Schadensfall auch durch die Stellungsanzeigeneinrichtung 21 angezeigt werden.

Alternativ kann, wie in Figur 9 dargestellt ist, vorgesehen sein, dass der Ventilsitz 18 am Grundgehäuse 13 zwischen der Kammer 38 und der Durchgangsbohrung 16 angeordnet ist. Das thermische Stellglied 28 ist parallel zum thermischen Stellglied 82 positioniert, so dass das Ventilelement 19 mit einem Stellelement 31 gemäß einer der vorstehenden Ausführungsformen 1 bis 4 aus der ersten Endlage 32 in die zweite Endlage 37 übergeführt werden kann und in dieser zweiten Endlage 37 positioniert gehalten wird. Damit das Ventilelement 19 in Abhängigkeit der Temperatur des durchströmenden Massenstromes ansteuerbar ist und unabhängig von dem Stellelement 31 eine Öffnungs- und Schließbewegung durchführen kann, ist vorgesehen, dass das Stellelement 31 an einem Ringelement 88 angreift, welches verschiebbar zum Stift 77 gelagert ist. Dieses Ringelement 88 weist an seiner Außenseite eine Kontur beziehungsweise Vertiefung 41 auf, wie dies beispielsweise beim Ventilelement 19 in Figur 1 dargestellt ist. Eine Durchgangsbohrung im Ringelement 88 ermöglicht, dass das thermische Stellglied 82 unmittelbar an dem Ventilschließglied 20 angreift und somit das Ringelement 88 durchdringt. Das Ringelement 88 selbst greift mit einer Stirnseite an dem Ventilschließglied 20 des Ventilelements 19 an. Gegenüberliegend ist eine Ringfläche ausgebildet, an der das thermische Stellglied 28, welches parallel zum thermischen Stellglied 82 angeordnet ist und dieses vorzugsweise umgibt, anliegt. Sobald das Stellglied 31 aus der ersten Endlage in die zweite Endlage übergeführt wurde, wird das Ventilschließglied 20 im Ventilsitz 18 gehalten. Die weiteren thermischen Stellglieder 28, 82 brauchen dabei keine weitere Stellkraft mehr ausüben.

Die Funktionsweise eines solchen thermostatischen Ventils 71 mit integriertem thermostatischen Sicherheitsventil 11 gemäß den Figuren 7 und 8 ist folgendermaßen: Sobald ein Massenstrom mit einer Temperatur durch das Gehäuse 12 fließt und die Temperatur kleiner als ein unterer Grenzwert einer Betriebstemperatur ist, verbleibt das Ventilelement 19 in der dargestellten Öffnungsstellung zum Ventilsitz 18. Die Kraft des Kraftspeicherelementes 38 überwiegt die Schließkraft des thermischen Stellgliedes 82. Durch die Stellungsanzeigeneinrichtung 21 wird beispielsweise die Position 0 angezeigt. Sobald die Temperatur des Massenstromes im Kreislauf den unteren Grenzwert übersteigt, wird in dem thermischen Stellglied 82 eine Schließkraft erzeugt, die größer ist als die Rückstellkraft des Kraftspeicherelementes 78. Das Ventilelement 19 führt eine Schließbewegung durch. Bei Erreichen des oberen Grenzwertes der Betriebstemperatur des Massenstromes wird der Ventilsitz 18 durch das Ventilelement 19 geschlossen, und die Anzeige steht beispielsweise auf 1. Dadurch wird der Massenstrom unterbunden, und die Temperatur des Massenstromes im Gehäuse 12 kühlt ab. Aufgrund der sich reduzierenden Schließkraft des thermischen Stellgliedes 82 beginnt das Regelventil 72 sich wieder zu öffnen. Das thermische Stellglied 28 bleibt infolge einer höheren Umwandlungstemperatur als das thermische Stellglied 82 in der dargestellten Betriebsstellung, das heißt, dass bis zum oberen Grenzwert der Betriebstemperatur eine temperaturabhängige Stellbewegung des Ventilelementes 19 nur durch das thermische Stellglied 82 erfolgt.

Sofern eine Störung auftritt, bei der beispielsweise das thermische Stellglied 82 nicht richtig arbeitet oder gebrochen ist, findet bei einer ansteigenden Temperatur des Massenstromes eine Schließbewegung des Ventilelementes 19 nicht mehr statt. Sobald der obere Grenzwert der Betriebstemperatur überschritten wird, erzeugt das thermische Stellglied 28 eine Stellkraft, so dass das Stellelement 31 durch eine Verschiebebewegung des Ventilsitzes 18 aus seiner ersten Endlage 32 in die zweite Endlage 37 übergeführt wird. Dabei wird die Durchlassöffnung 17 aufgrund des im Ventilsitz 18 anliegenden Ventilelementes 19 geschlossen. Aufgrund einer festen Anordnung der Stützscheiben 79 an dem Übertragungsstift 77 kann bei der Verschiebebewegung des Ventilelementes 19 eine Begrenzung der Verschiebebewegung vorgesehen sein, in dem die Stützscheibe 79 am Deckel 76 anliegt. Dadurch wird ein gesichertes Schließen in dieser Endlage erzielt. Die Stellungsanzeigeneinrichtung 31 wird ausgefahren, so dass beispielsweise die Kennziffer 2 beziehungsweise die Markierung 2 sichtbar wird. Somit ist von außen ersichtlich, dass das thermische Stellglied 82 nicht mehr funktionstüchtig ist. Bei einer sich anschließenden absenkenden Temperatur des Massenstromes bleibt das Sicherheitsventil 11 aufgrund des Stellelementes 31 geschlossen. Nach einer Schadensbehebung kann das thermostatische Ventil 71 wieder mechanisch entriegelt werden, indem über die Angriffsfläche 26 oder den Übertragungsstift 77 das Ventilelement 19 mit Ventilsitz 18 manuell oder mechanisch in die erste Endlage 32 übergeführt werden. Anschließend ist das Ventil 71 betriebsbereit.

Sofern das Kraftspeicherelement 78 nicht richtig arbeitet oder bricht, überwiegt die Stellkraft des thermischen Stellgliedes 82 und positioniert das Ventilelement 19 im Ventilsitz 18. Dadurch wird beispielsweise die Markierung 1 an der Stellungsanzeigeneinrichtung 21 sichtbar. Da gleichzeitig das Gehäuse 12 aufgrund des nicht mehr ermöglichten Durchflusses des Massenstromes erkaltet, wird im Zusammenspiel mit der Markierung 1 die Schadensaussage ermöglicht, dass das Kraftspeicherelement 78 beschädigt ist.

Bei der in Figur 9 beschriebenen Ausführungsform, bei der das Stellglied 28 parallel zum Stellglied 82 vorgesehen ist und sich einerseits an der Abstützfläche 39 des Ventilelementes 19 und andererseits am Boden 75 des Gehäuseabschnittes 74 abstützt, kann eine Störung dadurch erkannt werden, indem an der Stellungsanzeigeneinrichtung 31 beispielsweise die Ziffer 1 sichtbar ist und das Gehäuse 12 eine Temperatur aufweist, die von der eigentlichen Betriebstemperatur oder der zu überwachenden Temperatur beziehungsweise von der Schalttemperatur abweicht.

In Figur 10 ist eine schematische Schnittdarstellung einer weiteren alternativen Ausführungsform eines thermostatischen Ventils 71 vorgesehen, welche ein Regelventil 72 und das thermostatische Sicherheitsventil 11, bevorzugt in einem Gehäuse integriert, umfasst. Das thermostatische Sicherheitsventil 11 ist stromab des thermostatischen Ventils 71 im Gehäuse angeordnet. Diese Ausführungsform baut bezüglich dem Regelventil 72 auf den in Figur 7 beschriebenen Komponenten auf. Das Regelventil 72 umfasst den Gehäuseabschnitt 74, der in das Grundgehäuse 13 bevorzugt einschraubbar vorgesehen ist. Dieser Gehäuseabschnitt 74 ist durch einen Deckel 76 mit einer Verschraubung oder einer anderweitig lösbaren Fixierung verschlossen. Der Übertragungsstift 77 wird durch den Gehäuseabschnitt 74 und den Deckel 76 hindurchgeführt und ragt an einer Seite heraus. Zwischen dem Gehäuseabschnitt 74 und dem Deckel 76 ist ein Kraftspeicherelement 78 vorgesehen, welches sich an einem Ende an dem Gehäuseabschnitt 74 und am anderen Ende über eine Stützscheibe 79, welche fest an dem Übertragungsstift 77 angeordnet ist, abstützt. Das äußere gegenüber dem Deckel 76 herausragende Ende des Übertragungsstiftes 77 ist Teil der optischen Stellungsanzeigeneinrichtung 21. Aus der Position des Übertragungsstiftes 77 außerhalb des Deckels 76 kann die Position des Ventilelementes 19 in der Kammer 38 entnommen werden. Zwischen dem Ventilelement 19 und einem Boden 75 des Gehäuseabschnitts 74 ist ein thermisches Stellglied 82 vorgesehen, welches beispielsweise aus einer Formgedächtnislegierung als Federelement ausgebildet ist. Jedes Regelventil 72 ist bevorzugt als komplette Einheit in das Grundgehäuse 13 einsetzbar. Das Grundgehäuse 13 kann einteilig ausgebildet sein und das Gehäuse 12 bilden. Das Grundgehäuse 13 kann alternativ auch zusammen mit weiteren Gehäuseabschnitten das Gehäuse 12 bilden.

In der Kammer 38 ist der Ventilsitz 18 fest vorgesehen, der eine Durchgangsbohrung 17 umgibt, durch welche der Massenstrom durchgeführt wird, um zur Auslassöffnung 16 zu gelangen. Der Ventilsitz 18 kann auch als separates Bauteil vorgesehen sein, welches in die Kammer 38 eingepresst ist. Alternativ kann der Ventilsitz 18 einteilig an dem Grundgehäuse angeformt sein.

Stromab des ersten Ventilelementes 19 ist das thermische Sicherheitsventil 11 vorgesehen, welches getrennt von dem thermostatischen Ventil 71 in dem Grundgehäuse 3 angeordnet ist und der Auslassöffnung 16 zugeordnet ist. Dieses thermostatische Sicherheitsventil 11 kann alternativ auch an einem weiteren Ventilsitz angreifen, der beispielsweise der Durchgangsbohrung 17 zugeordnet ist und dem Ventilsitz 18 unmittelbar gegenüberliegt.

Das in dem Grundgehäuse 13 vorgesehene thermostatische Sicherheitsventil 11 umfasst beispielsweise eine Ausführungsform gemäß der vorbeschriebenen Ausführungsform 5. Die in Figur 5 am Grundgehäuse 13 vorgesehene Einlassöffnung 14 entspricht bei der Ausführungsform gemäß Figur 10 der Durchlassöffnung 17. Im Übrigen sind dieselben Funktionen und alternativen Ausgestaltungen wie bei der Ausführungsform gemäß Figur 5 vorgesehen. Alternativ kann vorgesehen sein, dass anstelle der Ausführungsform gemäß Figur 5 auch die weiteren Ausführungsformen der thermostatischen Sicherheitsventile 11 in den Figuren 1 bis 4 und 6 sowie deren vorbeschriebenen Alternativen vorgesehen sein können.

Durch diese Ausführungsform gemäß Figur 10 bzw. deren vorbeschriebenen Alternativen ist ermöglicht, dass sogenannte Kombi-Regelventile herstellbar sind, welche einerseits ein thermostatisches Ventil 71 als Regelventil und andererseits ein thermostatisches Sicherheitsventil 11 umfassen. Dadurch kann sichergestellt werden, dass im Falle des Brechens des Stellelements 82 zur Regelung eines Massenstromes in Abhängigkeit der Temperatur dennoch ein Schließen des thermostatischen Ventils 71 durch das thermostatische Sicherheitsventil 11 ermöglicht ist. Diese Ausführungsform gemäß Figur 10 stellt auch eine alternative Ausführungsform zu Figuren 7 bis 9 dar.

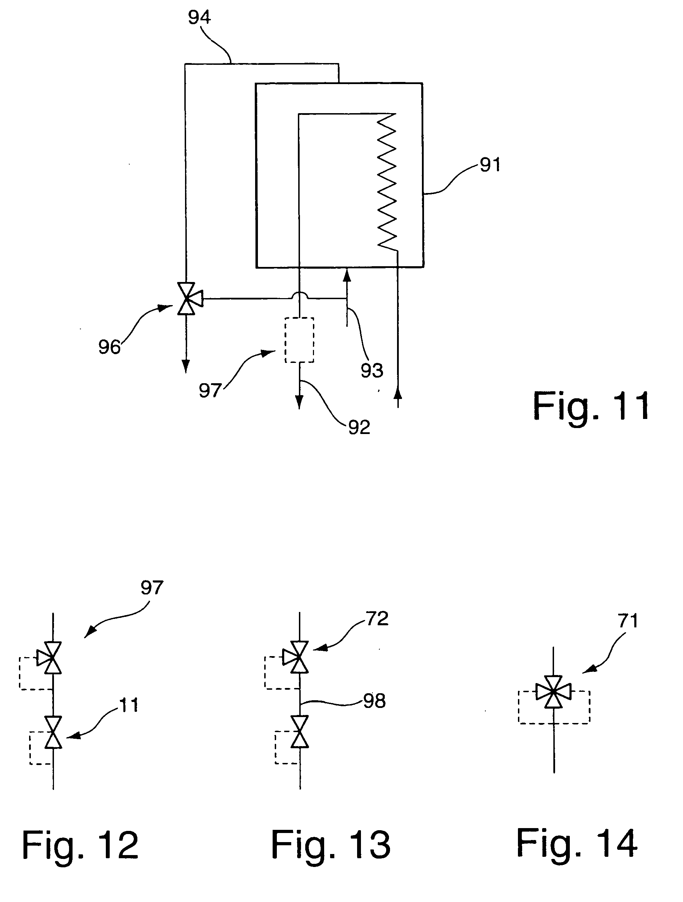

In Figur 11 ist eine schematische Darstellung für einen Anwendungsfall dargestellt, bei dem beispielsweise ein Speicher 91 mit einer Warmwasseraufbereitung vorgesehen ist. Ein durch Fernwärme aufgeheiztes Heizungswasser gelangt über eine Zuführleitung in den Speicher 91 und wärmt Brauchwasser auf. Das dem Speicher 91 zugeführte Heizungswasser wird über eine Rücklaufleitung 92 wieder einem Wärmetauscher zugeführt, welcher mit der dem Haus zugeführten Fernwärme in Verbindung steht. Über eine Kaltwasserleitung 93 wird kaltes Wasser dem Speicher 91 zugeführt. Durch eine Warmwasserleitung 94 kann dem Speicher 91 Warmwasser entnommen werden. Über eine Mischbatterie 96 kann eine gewünschte Wassertemperatur bedarfsmäßig ausgegeben werden. Damit ein zu starkes Aufwärmen oder Überhitzen des Speichers 91 vermieden wird, ist in der Rücklaufleitung 92 ein Rücklauftemperaturregler 97 vorgesehen.

Um ein störungsbedingtes Absperren der Rücklaufleitung 92 zu ermöglichen, wird dem Rücklauftemperaturregler 97 gemäß einer ersten Ausführungsform der Erfindung ein thermostatisches Sicherheitsventil 11 nachgeschalten, wie dies beispielsweise in Figur 12 dargestellt ist. Sofern der Rücklauftemperaturregler 97 beschädigt wird oder nicht mehr richtig arbeitet, kann eine überhöhte Betriebstemperatur im Rücklauf durch das thermostatische Sicherheitsventil 11 festgestellt und der den Speicher 91 durchströmende Massenstrom gesperrt werden. Somit kann ein Überhitzen des zu überwachenden Speichers 91 verhindert werden.

Gemäß einer alternativen Ausführungsform zur Überwachung der Betriebsbedingungen des Speichers 91 kann gemäß Figur 13 vorgesehen sein, dass anstelle eines Rücklauftemperaturreglers 97 der herkömmlichen Art mit beispielsweise einem Flüssigkeitsregler ein thermostatisches Ventil eingesetzt wird, welches einem Aufbau gemäß dem Regelventil 72 in Figur 7 entspricht. Diesem Regelventil 72 nachgeschalten kann wiederum ein thermostatisches Sicherheitsventil 11 vorgesehen sein. Die beiden Ventile 72 und 11 sind über einen Rohrleitung 98 miteinander verbunden.

Des Weiteren kann alternativ zur Überprüfung der Betriebsbedingungen in der Rücklaufleitung 92 ein thermostatisches Ventil 71 vorgesehen sein, welches in der Funktion und der Ausführungsform dem in Figur 7 dargestellten Ventil entspricht und als Schaltbild in Figur 14 dargestellt ist.

Die vorbeschriebenen Ausführungsformen des thermostatischen Sicherheitsventils 11 als auch des kombinierten thermostatischen Ventils 71, welches ein Regelventil 72 und ein integriertes thermostatisches Sicherheitsventil 11 umfasst, können auf alle Flüssigkeits-, Gas- oder Dampfleitungen übertragen werden, bei denen temperaturabhängige Massenströme geregelt, überwacht und/oder unterbrochen werden sollen.

## Patentansprüche

1. Thermostatisches Sicherheitsventil zur Regelung eines Massenstromes, mit einem Gehäuse (12), welches eine Einlassöffnung (14) und eine Auslassöffnung (16) aufweist, mit einer Durchlassöffnung (17), welche die Einlassöffnung (14) und die Auslassöffnung (16) zum Durchströmen des Massenstromes verbindet und einen in der Durchlassöffnung (17) angeordneten Ventilsitz (18), welcher mit einem Ventilelement (19) verschließbar ist, **dadurch gekennzeichnet,**
- **dass** zwischen dem Ventilelement (19) oder dem Ventilsitz (18) und dem Gehäuse (12) zumindest ein Stellelement (31) wirkt, welches in zwei definierten Endlagen (32, 37) selbsthaltend anordenbar ist und in der einen Endlage (32) das Ventilelement (19) oder der Ventilsitz (18) in einer Öffnungsstellung (34) zum Ventilsitz (18) oder Ventilelement (19) und in der weiteren Endlage (37) das Ventilelement (19) oder den Ventilsitz (18) in einer Schließstellung (36) zum Ventilsitz (18) oder Ventilelement (19) positioniert, und
- **dass** an dem Ventilelement (19) oder dem Ventilsitz (18) ein Stellglied (28; 82) angreift, welches in Abhängigkeit der Temperatur des Massenstromes zumindest eine Stellbewegung des Ventilelementes (19) oder des Ventilsitzes (18) erzielt und das Ventilelement (19) in die erste Endlage (32) oder zweite Endlage (37) überführt.

2. Thermostatisches Sicherheitsventil nach Anspruch 1, **dadurch gekennzeichnet, dass** ein vorzugsweise stab- oder stiftförmiges Element (22) vorgesehen ist, welches mit dem Ventilelement (19) in Verbindung steht und aus dem Gehäuse (12) herausragt und vorzugsweise das Element (22) wenigstens zweiteilig ausgebildet ist.

3. Thermostatisches Sicherheitsventil nach Anspruch 1, **dadurch gekennzeichnet, dass** das Ventilelement (19) eine optische Stellungsanzeigeneinrichtung (21) ansteuert, welche die Lage des Ventilelementes (19) zur Durchlassöffnung (17) anzeigt und vorzugsweise an dem herausragenden Abschnitt des vorzugsweise stab- oder stiftförmigen Elementes (22) als Stellungsanzeigeneinrichtung (21) eine Markierung oder Skalierung zur Anzeige der Stellung des Ventilelementes (19) vorgesehen ist.

4. Thermostatisches Sicherheitsventil nach Anspruch 2, **dadurch gekennzeichnet, dass** an dem aus dem Gehäuse (12) herausragenden Element (22) zumindest eine Angriffsfläche (26) vorgesehen ist, durch welche das Ventilelement (19) manuell aus einer Schließstellung (37) in eine Öffnungsstellung (34) oder umgekehrt überführbar ist.

5. Thermostatisches Sicherheitsventil nach Anspruch 2, **dadurch gekennzeichnet, dass** an oder in einer Durchgangsbohrung (23) im Gehäuse (12), insbesondere im Grundkörper (13) oder Gehäusedeckel (24) ein Dichtungselement (98) vorgesehen ist.

6. Thermostatisches Sicherheitsventil nach Anspruch 1, **dadurch gekennzeichnet, dass** das Stellelement (31) als Schnappfederelement ausgebildet ist, welches vorzugsweise ringscheibenförmig ausgebildet ist und ein äußerer Randbereich (42) sich am Gehäuse (12) und ein innerer Randbereich (43) sich am Ventilelement (19) abstützt, oder als Tellerfeder, gelochte Scheibe oder als mäanderförmig ausgebildete Scheibe hergestellt ist.

7. Thermostatisches Sicherheitsventil nach Anspruch 6, **dadurch gekennzeichnet, dass** zur Aufnahme des als Schnappfederelement ausgebildeten Stellelementes (31) zumindest am Gehäuse (12) oder am Ventilelement (19) eine Vertiefung (41) vorgesehen ist, oder dass zur Aufnahme des als Schnappfederelement ausgebildeten Stellelementes (31) am Gehäuse (12) oder am Ventilelement (19) eine Schulter (44) vorgesehen ist, an der ein äußerer oder innerer Randbereich (43, 42) des Schnappfederelementes anliegt und vorzugsweise mit einem Befestigungsring zur Schulter (44) positioniert gehalten ist.

8. Thermostatisches Sicherheitsventil nach Anspruch 1, **dadurch gekennzeichnet, dass** das Stellelement (31) als zumindest ein federgelagerter Rastnocken (51) oder eine federgelagerte Kugel ausgebildet ist, welche in der jeweiligen Endlage (32, 37) in einer gegenüberliegenden Vertiefung (54) verrastend anordenbar ist.

9. Thermostatisches Sicherheitsventil nach einem der Ansprüche 1 bis 7, **dadurch gekennzeichnet, dass** das Stellelement (31) als zumindest eine randoffene Scheibe oder ein randoffener Ring, insbesondere Sicherungsscheibe, ausgebildet ist und vorzugsweise das als randoffene Scheibe ausgebildete Stellelement (31) an einer Aufnahme (101, 102) am Gehäuse (12) und dem stab- oder stiftförmigen Element (22) angreift und bei einer Bewegung aus der Öffnungsstellung (34) in die Schließstellung (36) oder umgekehrt aus zumindest einer Aufnahme (101, 102) am Gehäuse oder dem stiftförmigen Element (22) freikommt.

10. Thermostatisches Sicherheitsventil nach Anspruch 9, **dadurch gekennzeichnet, dass** zumindest am Gehäuse (12) oder am stiftförmigen Element (22) benachbart zur Aufnahme (101, 102) eine weitere Aufnahme vorgesehen ist, in welcher das Stellelement (31) nach dem Überführen des Ventilelementes (19) aus der Schließstellung (36) in die Öffnungsstellung (34) oder aus der Öffnungsstellung (34) in die Schließstellung (36) einrastbar ist und vorzugsweise die übergeführte Schließstellung (36) oder Öffnungsstellung (34) aufrecht erhält.

11. Thermostatisches Sicherheitsventil nach Anspruch 1, **dadurch gekennzeichnet, dass** das Stellglied (28) als thermisches Stellglied ausgebildet ist, welches vorzugsweise als Federelement aus einer Formgedächtnislegierung ausgebildet ist.

12. Thermostatisches Sicherheitsventil nach Anspruch 1, **dadurch gekennzeichnet, dass** an dem Ventilelement (19) ein Kraftspeicherelement (78) angreift, welches in einer ersten Bewegungsrichtung wirkt und das Ventilelement (19) in eine Ausgangsposition positioniert und dass an dem Ventilelement (19) zumindest ein thermisches Stellglied (82) aus einer Formgedächtnislegierung angreift, welches eine der ersten Bewegungsrichtung entgegengesetzte Wirkrichtung aufweist und temperaturabhängig eine Stellbewegung auf das Ventilelement (19) entgegen dem zumindest einen Kraftspeicherelement (78) bewirkt, sobald die Stellkraft des thermischen Stellgliedes (82) größer als die des Kraftspeicherelementes (78) ist.

13. Thermostatisches Sicherheitsventil nach Anspruch 12, **dadurch gekennzeichnet, dass** der Ventilsitz (18) in einem Bohrungsabschnitt (84) des Gehäuses (12) verschiebbar angeordnet ist und das Stellglied (28) als thermisches Stellglied ausgebildet ist, welches in dem Bohrungsabschnitt (84) positioniert ist und an dem Ventilsitz (18) angreift, so dass bei einer Temperatur des Massenstromes oberhalb des Grenzwertes für die Betriebstemperatur durch das thermische Stellglied (28) eine Stellkraft erzeugt wird, durch welche der Ventilsitz (18) aus einer ersten Endlage (32), welche vorzugsweise eine Öffnungsstellung (34) ist, in eine zweite Endlage (37), welche vorzugsweise eine Schließstellung (36) ist, überführbar ist und das Ventilelement (19) im Ventilsitz (18) anliegt.

14. Thermostatisches Sicherheitsventil nach Anspruch 12, **dadurch gekennzeichnet, dass** an dem Ventilelement (19) ein Stellelement (31), insbesondere Schnappfederelement, angreift, welches aus einer ersten Endlage (32) an eine zweite Endlage (37) durch eine Stellkraft eines weiteren Stellgliedes (28), das als thermisches Stellglied, insbesondere aus einer Formgedächtnislegierung, ausgebildet ist, überführbar ist und vorzugsweise das Stellglied (28) das Stellglied (82) umgibt.

15. Thermostatisches Sicherheitsventil nach Anspruch 12, **dadurch gekennzeichnet, dass** das Ventilelement (19) einem Ventilsitz (18) zugeordnet ist, der im Gehäuse (12) verschiebbar angeordnet ist und an dem Ventilelement (19) ein die Durchlassöffnung (17) durchdringendes Stiftelement (87) vorgesehen ist, welches ein weiteres Ventilelement (86) aufnimmt, das an einem dem Ventilsitz (18) gegenüberliegenden Ventilsitz (89) in Abhängigkeit der Position des Ventilelementes (19) angreift.

## Claims

1. A thermostatic safety, valve for regulating a mass flow having a body (12) which has an inlet opening (14) and an outlet opening (16); a through-passage aperture (17) which connects the inlet opening (14) and the outlet opening (16) for allowing the passage of the mass flow therethrough; and a valve seat (18) which is arranged within said through-passage aperture (17) and is closed with a valve member (19), **characterised in that**
- between the valve member (19) or the valve seat (18) and the body (12) at least one actuating member (31) acts, which is arranged so as to be self-locking in two defined end position (32, 37) and which, when in a first end position (32), positions the valve member (19) or the valve seat (18) in an opening position (34) with respect to the valve seat (18) or valve member (19) and, in a further end position (37), positions the valve member (19) or the valve seat (18) in a closing position (36) with respect to the valve seat (18) or valve member (19), and
- an actuator (28, 82) is applied to the valve member (19) or the valve seat (18) which, depending on the temperature of the mass flow, achieves at least one actuating movement of the valve member (19) or the valve seat (18) and moves the valve member (19) to the first end position (32) or second end position (37).

2. The thermostatic safety valve as claimed in claim 1, **characterised in that** a preferably rod-shaped or pin-shaped member (22) is provided which is connected with the valve member (19) and protrudes from the body (12) and preferably the member (22) is realised in at least two pieces.

3. The thermostatic safety valve as claimed in claim 1, **characterised in that** the valve member (19) activates a visual position indicating device (21) which indicates the position of the valve member (19) with respect to the through-aperture (17) and in particular the protruding portion of the preferably rod-shaped or pin-shaped member (22) is provided with a marking or scale which serves as a position indicating device (21) for indicating the position of the valve member (19).

4. The thermostatic safety valve as claimed in claim 2, **characterised in that** the portion of the member (22) protruding from the body (12) is provided with at least one working surface (26) by means of which the valve member (19) may be manually moved from a closing position (36) to an opening position (34), or vice versa.

5. The thermostatic safety valve as claimed in claim 2, **characterised in that** a sealing member (98) is provided on or in a through hole (23) formed in the body (12), in particular in the body base portion (13) or in the body cover (24).

6. The thermostatic safety valve as claimed in claim 1, **characterised in that** the actuating member (31) is realised as a catch spring member which preferably is realised as a catch spring member is shaped in the form of an annular disc and an outer circumferential region (42) abuts on the body (12) and an inner circumferential region (43) abuts on the valve member (19) or is fabricated as a disc spring, a perforated flat spring or a meandering disc.

7. The thermostatic safety valve as claimed in claim 6, **characterised in that** for accommodating the actuating member (31), which is realised as a catch spring member, a depression (41) is provided at least on the body (12) or on the valve member (19) that for accommodating the actuating member (31), which is realised as a catch spring member, a shoulder (44) is provided on the body (12) or on the valve member (19), to which an outer or an inner circumferential region (43, 42) of the catch spring member is applied, said circumferential region being preferably fixed in position with respect to the shoulder (44) with the aid of a fastening ring.

8. The thermostatic safety valve as claimed in claim 1, **characterised in that** the actuating member (31) is realised as at least one spring-loaded snap-on cam (51) or spring-loaded ball which is disposed in a locking manner in an opposing depression (54) when in the respective end position (32, 37).

9. The thermostatic safety valve as claimed in any of the claims 1 to 7, **characterised in that** the actuating member (31) is realised as at least one disc with an open rim or ring with an open rim, in particular as a retaining disc and preferably the actuating member (31) realised as a disc with an open rim is applied to a seating (101, 102) formed on the body (12) and on the rod-shaped or pin-shaped member (22) and is released, upon a movement from the opening position (34) to the closing position (36) or vice versa, from at least one of the seatings (101, 102) formed on the body or on the pin-shaped member (22).

10. The thermostatic safety valve as claimed in claim 9, **characterised in that** at least on the body (12) or on the pin-shaped member (22), adjacent to the seating (101, 102), a further seating is provided wherein the actuating member (31) is lock into place, preferably maintaining the reached closing position (36) or opening position (34), after the valve member (19) has been moved from the closing position (36) to the opening position (34) or from the opening position (34) to the closing position (36).

11. The thermostatic safety valve as claimed in claim 1, **characterised in that** the actuator (28) is realised as a thermal actuator which is preferably shaped in the form of a spring member made of a shape memory alloy.

12. The thermostatic safety valve as claimed in claim 1, **characterised in that** the valve member (19) has an energy storing member (78) abutting thereon which acts in a first direction of movement and positions the valve member (19) in an initial position, and that the valve member (19) has at least one thermal actuator (82) made of a shape memory alloy applied thereon which has a direction of action that opposes said first direction of movement and causes an actuating movement against the at least one energy storing member (78) to be exerted on the valve member (19) once the actuating force of the thermal actuator (82) is greater than that of the energy storing member (78).

13. The thermostatic safety valve as claimed in claim 12, **characterised in that** the valve seat (18) is displaceably arranged in a hole portion (84) of the body (12) and the actuator (28) is realised as a thermal actuator which is positioned in the hole portion (84) and is applied to the valve seat (18), such that once the temperature of the mass flow exceeds the threshold value for the operating temperature, the thermal actuator (28) creates an actuating force by which the valve seat (18) may be moved from a first end position (32), which is preferably an opening position (34), to a second end position (37), which is preferably a closing position (36), and that the valve member (19) is applied to the valve seat (18).

14. The thermostatic safety valve as claimed in claim 12, **characterised in that** the valve member (19) has an actuating member (31), in particular a catch spring member, applied thereto which is moved from a first end position (32) to a second end position (37) by the actuating force of a further actuator (28) which is realised as a thermal actuator, made in particular of a shape memory alloy, and that the actuator (28) preferably surrounds the actuator (82).

15. The thermostatic safety valve as claimed in claim 12, **characterised in that** the valve member (19) is associated with a valve seat (18) which is displaceably arranged within the body (12) and that a pin member (87) penetrating the through-aperture (17) is arranged on the valve member (19), said pin member accommodating a further valve member (86) which, depending on the position of the valve member (19), is applied to a valve seat (89) situated opposite the valve seat (18).

## Revendications

1. Soupape de sûreté thermostatique permettant le réglage d'un flux massique, comprenant un boîtier (12) qui présente un orifice d'admission (14) et un orifice d'évacuation (16), un orifice de passage (17) qui relie l'orifice d'admission (14) et l'orifice d'évacuation (16) pour permettre le passage du flux massique, et un siège de soupape (18) disposé dans l'orifice de passage (17) et pouvant être fermé par un élément de soupape (19), **caractérisée en ce que**
- au moins un élément de réglage (31) agit entre l'élément de soupape (19) ou le siège de soupape (18) et le boîtier (12), lequel élément de réglage peut être disposé de manière verrouillée en deux positions finales définies (32, 37) et qui, lorsqu'il se trouve dans la position finale (32), positionne l'élément de soupape (19) ou le siège de soupape (18) dans une position d'ouverture (34) par rapport au siège de soupape (18) ou à l'élément de soupape (19), et qui, lorsqu'il se trouve dans l'autre position finale (37), positionne l'élément de soupape (19) ou le siège de soupape (18) dans une position de fermeture (36) par rapport au siège de soupape (18) ou à l'élément de soupape (19), et
- un organe de réglage (28; 82) s'appuie contre l'élément de soupape (19) ou le siège de soupape (18) et provoque, en fonction de la température du flux massique, au moins un mouvement de réglage de l'élément de soupape (19) ou du siège de soupape (18) et fait passer l'élément de soupape (19) dans la première position finale (32) ou dans la deuxième position finale (37).

2. Soupape de sûreté thermostatique selon la revendication 1, **caractérisée en ce qu'**il est prévu un élément (22) de préférence en forme de barre ou de broche, lequel est relié à l'élément de soupape (19) et dépasse du boîtier (12), et **en ce que** l'élément (22) est constitué de préférence au moins en deux parties.

3. Soupape de sûreté thermostatique selon la revendication 1, **caractérisée en ce que** l'élément de soupape (19) active un indicateur optique de position (21) qui indique la position de l'élément de soupape (19) par rapport à l'orifice de passage (17), et **en ce qu'**une marque ou une échelle graduée est prévue de préférence sur la partie sortante de l'élément (22) de préférence en forme de barre ou de tige comme indicateur optique de position (21) pour indiquer la position de l'élément de soupape (19).

4. Soupape de sûreté thermostatique selon la revendication 2, **caractérisée en ce qu'**il est prévu, sur l'élément (22) sortant du boîtier (12), au moins une surface de prise (26) grâce à laquelle il est possible de faire passer manuellement
l'élément de soupape (19) d'une position de fermeture (37) à une position d'ouverture (34) ou inversement.

5. Soupape de sûreté thermostatique selon la revendication 2, **caractérisée en ce qu'**un élément d'étanchéité (98) est prévu sur ou dans le trou de passage (23) ménagé dans le boîtier (12), notamment dans le corps de base (13) ou le couvercle de boîtier (24).

6. Soupape de sûreté thermostatique selon la revendication 1, **caractérisée en ce que** l'élément de réglage (31) est réalisé sous forme d'élément de ressort à déclic, lequel est fabriqué de préférence en forme de disque annulaire dont une zone périphérique extérieure (42) s'appuie contre le boîtier (12) et une zone périphérique intérieure (43) s'appuie contre l'élément de soupape (19), ou lequel est fabriqué sous forme de rondèlle-ressort, de disque perforé ou de disque réalisé en forme de méandre.

7. Soupape de sûreté thermostatique selon la revendication 6, **caractérisée en ce qu'**il est prévu au moins sur le boîtier (12) ou sur l'élément de soupape (19) un creux (41) en vue de recevoir l'élément de réglage (31) réalisé sous forme d'élément de ressort à déclic, ou **en ce qu'**il est prévu sur le boîtier (12) ou sur l'élément de soupape (19), en vue de recevoir l'élément de réglage (31) réalisé en forme d'élément de ressort à déclic, un épaulement (44) contre lequel repose une zone périphérique extérieure ou intérieure (43, 42) de l'élément de ressort à déclic qui est de préférence maintenue en position par rapport à l'épaulement (44) au moyen d'une bague de fixation.

8. Soupape de sûreté thermostatique selon la revendication 1, **caractérisée en ce que** l'élément de réglage (31) est réalisé sous la forme d'au moins une came de verrouillage (51) montée sur ressort ou d'une bille montée sur ressort qui peut être disposée dans l'une ou l'autre des positions finales (32, 37) de manière à s'enclencher dans un creux (54) situé du côté opposé.

9. Soupape de sûreté thermostatique selon l'une des revendications 1 à 7, **caractérisée en ce que** l'élément de réglage (31) est réalisé sous la forme d'au moins une rondelle ouverte sur le bord ou d'un anneau ouvert sur le bord, notamment d'une rondelle d'arrêt, et **en ce que** de préférence l'élément de réglage (31) réalisé sous forme de rondelle ouverte sur le bord s'appuie contre un logement (101, 102) situé sur le boîtier (12) et contre l'élément (22) en forme de barre ou de tige, et, lors d'un passage de la position d'ouverture (34) à la position de fermeture (36) ou inversement, est libéré d'au moins un logement (101, 102) situé sur le boîtier ou l'élément (22) en forme de tige.

10. Soupape de sûreté thermostatique selon la revendication 9, **caractérisée en ce qu'**il est prévu de manière contiguë au logement (101, 102), au moins sur le boîtier (12) ou sur l'élément (22) en forme de tige, un autre logement dans lequel l'élément de réglage (31) peut s'enclencher une fois que l'élément de soupape (19) est passé de la position de fermeture (36) à la position d'ouverture (34) ou de la position d'ouverture (34) à la position de fermeture (36), et lequel, de préférence, maintient en place la position de fermeture (36) ou la position d'ouverture (34) ainsi obtenue.

11. Soupape de sûreté thermostatique selon la revendication 1, **caractérisée en ce que** l'organe de réglage (28) est réalisé sous forme d'organe de réglage thermique, lequel est réalisé de préférence sous forme élément de ressort conçu en un alliage à mémoire de forme.

12. Soupape de sûreté thermostatique selon la revendication 1, **caractérisée en ce qu'**un élément accumulateur d'énergie (78) s'appuie contre l'élément de soupape (19), lequel élément accumulateur agit dans un premier sens de déplacement et positionne l'élément de soupape (19) dans une position initiale, et **en ce qu'**au moins un organe de réglage thermique (82) réalisé en un alliage à mémoire de forme s'appuie contre l'élément de soupape (19), lequel organe de réglage thermique présente un sens d'action allant à l'opposé du premier sens de déplacement et provoque, en fonction de la température, un mouvement de réglage au niveau de l'élément de soupape (19) allant à l'opposé dudit au moins un élément accumulateur d'énergie (78), et ce dès que la puissance de réglage de l'organe de réglage thermique (82) est supérieure à celle de l'élément accumulateur d'énergie (78).

13. Soupape de sûreté thermostatique selon la revendication 12, **caractérisée en ce que** le siège de soupape (18) est disposé dans une partie perforée (84) du boîtier (12) de manière à pouvoir s'y déplacer, et **en ce que** l'organe de réglage (28) est réalisé sous forme d'organe de réglage thermique qui est positionné dans la partie perforée (84) et s'appuie contre le siège de soupape (18) de sorte que, lorsque la température du flux massique se situe au-dessus de la valeur limite prévue pour la température de service, l'organe de réglage thermique (28) génère une puissance de réglage qui permet de faire passer le siège de soupape (18) d'une première position finale (32), qui est de préférence une position d'ouverture (34), à une deuxième position finale (37), qui est de préférence une position de fermeture (36), et de faire reposer l'élément de soupape (19) dans le siège de soupape (18).

14. Soupape de sûreté thermostatique selon la revendication 12, **caractérisée en ce qu'**un élément de réglage (31), notamment un élément de ressort à déclic, s'appuie contre l'élément de soupape (19) et peut passer d'une première position finale (32) à une deuxième position finale (37) au moyen d'une puissance de réglage fournie par un autre organe de réglage (28) qui est réalisé sous forme d'organe de réglage thermique conçu notamment en un alliage à mémoire de forme, et **en ce que** de préférence l'organe de réglage (28) entoure l'organe de réglage (82).

15. Soupape de sûreté thermostatique selon la revendication 12, **caractérisée en ce que** l'élément de soupape (19) est affecté à un siège de soupape (18) qui est disposé dans le boîtier (12) de manière à pouvoir s'y déplacer, et **en ce qu'**il est prévu, sur l'élément de soupape (19), un élément en forme de tige (87) traversant l'orifice de passage (17), lequel reçoit un autre élément de soupape (86) qui s'appuie, en fonction de la position de l'élément de soupape (19), contre un siège de soupape (89) situé du côté opposé au siège de soupape (18).
